(19) Europäisches Patentamt / European Patent Office / Office européen des brevets

(11) **EP 3 100 601 B1**

(12) **EUROPEAN PATENT SPECIFICATION**

(45) Date of publication and mention
of the grant of the patent:
**19.02.2020 Bulletin 2020/08**

(51) Int Cl.:
**A01B 79/00** $^{(2006.01)}$

(21) Application number: **16169228.0**

(22) Date of filing: **11.05.2016**

(54) **POSITIONING RECEIVER HEIGHT DETERMINATION FOR MOBILE MACHINES**

POSITIONSEMPFÄNGERHÖHENBESTIMMUNG FÜR MOBILE MASCHINEN

DÉTERMINATION DE LA HAUTEUR D'UN RÉCEPTEUR DE POSITIONNEMENT POUR MACHINES MOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2015 US 201562169695 P**

(43) Date of publication of application:
**07.12.2016 Bulletin 2016/49**

(73) Proprietor: **AGCO International GmbH
8212 Neuhausen am Rheinfall (CH)**

(72) Inventor: **Nothdurft, Tobias
87616 Marktoberdorf (DE)**

(74) Representative: **AGCO Intellectual Property
Department
AGCO Limited
Abbey Park Stoneleigh
Kenilworth, Warwickshire CV8 2TQ (GB)**

(56) References cited:
**US-A1- 2013 197 767      US-A1- 2014 222 302**

## Description

### FIELD

Embodiments of the present invention relate to automated positioning for mobile machines. More particularly, embodiments of the present invention relate to positioning systems operable to compensate for variations in the height of positioning receivers mounted on the mobile machines.

### BACKGROUND

The agriculture industry has evolved from relatively small operations using simple machines to larger operations managed by fewer people using larger, more sophisticated machinery. This change has been driven, in part, by global competition compelling producers to implement more cost-effective techniques and to acquire more efficient and productive machinery. Farmers are also leveraging modern technology to implement precision agriculture practices to increase production efficiency, productivity and profitability while minimizing undesirable environmental impacts. Precision agriculture includes site-specific crop management practices wherein resource application and agronomic practices are improved to better match soil and crop requirements as they vary in the field and from field to field.

As tractors, harvesters and other agricultural machines become larger and more sophisticated, and are used with larger and more sophisticated implements, the level of training necessary to operate the machines typically increases. To simplify operation of these machines manufacturers are automating various functions of the machines. One example of machine automation is automated guidance, a function that enables a machine to steer itself along a designated path. To implement machine automation such as automated guidance, modern agricultural machines include positioning systems that indicate the geographic location of the machine in a field, sometimes to within a centimeter of accuracy.

Another aspect of precision agriculture that requires the use of geographic positioning includes application and seeding. Application equipment, such as sprayers and fertilizer spreaders, use positioning to determine a current location of the machine in a field, to track which portions of the field have already been covered, and to apply product only to portions of a field that have not already been covered by, for example, turning on and off certain spray nozzles on a sprayer. Seeding equipment may similarly use positioning technology to track which portions of a field have been planted and plant seeds only in unplanted areas, to apply different kinds of seeds according to a prescription map, or both.

Most positioning systems use a global navigation satellite system to determine a geographic location of a machine. A global navigation satellite system (GNSS) is a satellite-based electronic navigation system that provides geo-spatial positioning on or near the Earth's surface. Examples of such GNSS systems include the NAVSTAR global positioning system (often referred to simply as "GPS") operated by the United States, the GLONASS system operated by Russia, and the GALILEO system being deployed by the European Union.

Global positioning may be determined with a GNSS receiver which detects and decodes signals from a number of satellites orbiting the earth. The signals from each of these satellites indicate the position of the satellite and the time at which the signals were sent. The satellite signals may be augmented with additional data to increase the accuracy of GNSS receiver systems. GNSS receivers use the satellite signals, and optionally additional augmentation signals, to calculate latitude, longitude, and altitude of the receiver. This information is often used in vehicle guidance systems to guide a vehicle and direct it to perform certain tasks at a particular position. For example, an agricultural vehicle may be guided to a precise position by a GNSS receiver and commanded to drop a seed at that particular position.

Positioning technology is used on mobile machines in other industries as well, such as the construction and forestry industries.

The above section provides background information related to the present disclosure which is not necessarily prior art. An example of a prior art agricultural system can be found in US Patent Application Publication Number US 2013/0197767 A1.

### SUMMARY

A mobile machine according to a first embodiment of the invention comprises a wheel for supporting the machine on a ground surface, the wheel including a tire defining an outer portion of the wheel, a positioning receiver, and one or more computing devices. The one or more computing devices are configured to determine a travel characteristic of the machine, determine a rotational speed of the wheel, determine a radius of the tire based on the rotational speed of the wheel and the travel characteristic, and determine a height of the positioning system receiver from the ground surface using the radius of the tire.

A method of determining a height of a positioning system receiver of a mobile machine according to another embodiment of the invention comprises determining a travel characteristic of the machine, determining a rotational speed of a wheel of the machine, wherein the wheel supports the machine on a ground surface and includes a tire defining an outer portion of the wheel, determining a radius of the tire based on the rotational speed of the wheel and the travel characteristic, and determining a height of the positioning system receiver from the ground surface using the radius of the tire.

These and other important aspects of the present invention are described more fully in the detailed description below. The invention is not limited to the particular methods and systems described herein. Other embodiments may be used and/or changes to the described embodiments may be made without departing from the scope of the claims that follow the detailed description.

## DRAWINGS

Embodiments of the present invention are described in detail below with reference to the attached drawing figures, wherein:

Fig. 1 is a side elevation view of a tractor embodying principles of the present invention.
Fig. 2 is a schematic illustration of various components of a communication and control system of the tractor of Fig. 1.
Fig. 3 is a schematic diagram of a drive train of the tractor of Fig. 1.
Figs. 4A-C illustrate a diagram of various components of the tractor of Fig. 1 corresponding to a front elevation view of the tractor, and illustrating a calculated navigation point at different positions relative to a ground surface as a result of variations in tire radius.
Figs. 5A-D illustrate exemplary methods of performing embodiments of the invention.
Fig. 6 illustrates an exemplary scenario wherein a machine is operating on a sloped ground surface.

The drawing figures do not limit the present invention to the specific embodiments disclosed and described herein. The drawings are not necessarily to scale, emphasis instead being placed upon clearly illustrating the principles of the invention.

## DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following description is, therefore, not to be taken in a limiting sense.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

The present invention provides a positioning system for a mobile machine capable of automatically detecting the height of a positioning receiver from a ground surface to thereby preserve the accuracy of the positioning system. Embodiments of the invention include a system operable to automatically determine the radius of a wheel and to use the wheel radius to determine or adjust the height of the positioning receiver. This invention thus automatically compensates for variations in the positioning receiver height caused by, for example, changes in wheels or tires that affect the height of the positioning receiver. The positioning system may be part of, for example, an automatic guidance system operable to automatically steer the mobile machine along a predetermined path or an application system operable to place seeds, fertilizer or other products at precise locations in a field.

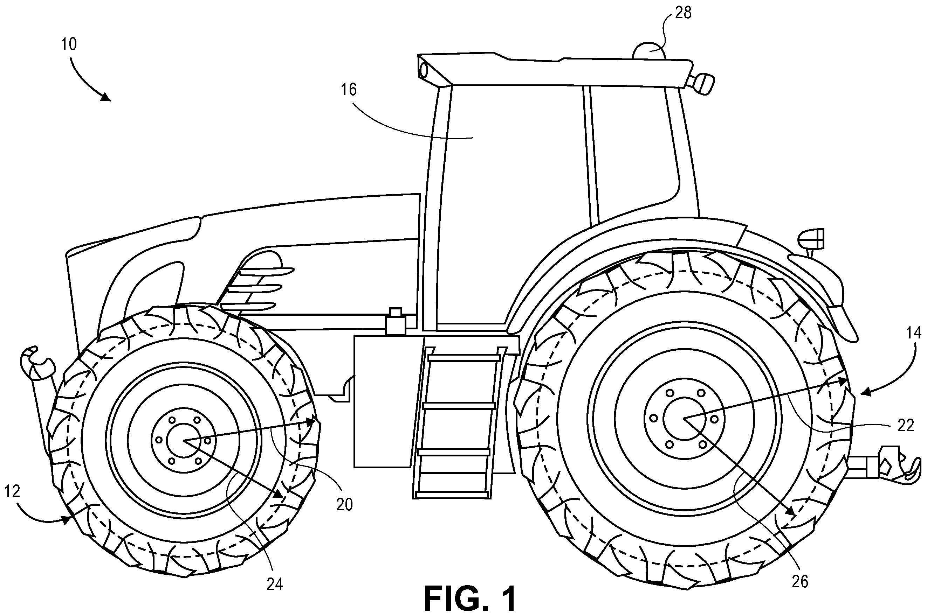

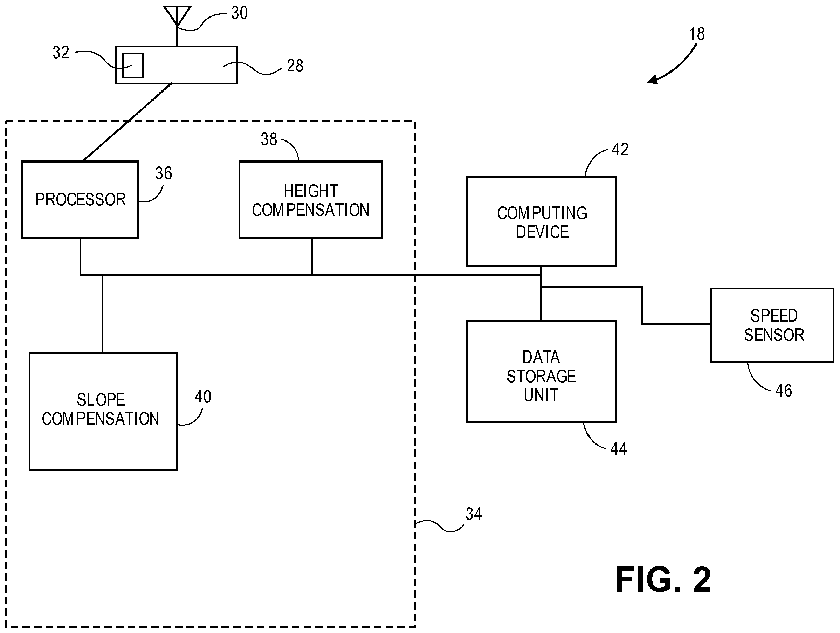

Turning now to the drawing figures, and initially Figs. 1 and 2, an exemplary tractor 10 incorporating an embodiment of the present invention is illustrated. The tractor 10 may be used, for example, in the agriculture or construction industries, although for simplicity embodiments of the invention are described for use in the agriculture industry. The tractor 10 includes front wheels 12, rear wheels 14, an operator cabin 16, and a communications and control system 18 illustrated, in part, in Fig. 2. As used herein, "wheel" includes both a rim portion and a tire mounted on the rim portion, wherein the tire defines an outer portion of the wheel.

There may be different wheel sizes available and suitable for use with the tractor 10. The wheels 12, 14 may be the largest wheels suitable for use with the tractor 10, wherein the front wheels 12 present a radius 20 and the rear wheels 14 present a radius 22. A smaller set of wheels may also be used on the same tractor 10, wherein smaller front wheels may present a radius 24 and smaller rear wheels may present a radius 26. The radii 20, 22, 24, 26 may correspond to the outermost circumference of the wheel defined by the tire tread, or may correspond to an effective radius that is less than the outermost circumference. An effective radius reflects the fact that the tire tread normally sinks into the ground rendering the actual, working radius of the wheel (that is, the distance between the center of the wheel/axle and the ground surface) less than the outermost radius defined by the tire tread. Tire manufacturers typically provide a predefined effective tire diameter or radius (often called "static loaded radius" or "SLR") corresponding to nominal tire load and inflation conditions. The SLR may be used to define the radii 20, 22, 24, 26.

The communications and control system 18 includes a positioning receiver 28 with an antenna 30 for receiving signals and one or more components 32 for processing or conditioning the signals. The communications and control system 18 also includes an automatic guidance system 34 operable to determine a geographic location of the tractor 10 and automatically steer the tractor 10 along a path. The automatic guidance system 34 may comprise a positioning data processor component 36, a height compensation component 38, and a slope compensation component 40.

Position information generated by the positioning receiver 28 may be used by the automatic guidance system 34 and/or by other components or systems associated with the tractor 10, such as a seeder or applicator that uses positioning information to automatically determine seed placement or product application. Thus, the positioning receiver 28 may be part of the automatic guidance system 34 or may be a separate component in communication with the automatic guidance system 34. The communications and control system 18 may further comprise at least one computing device 42, a data storage unit 44 and a speed sensor 46 associated with a drivetrain component, as explained below. The illustrated communications and control system 18 is exemplary in nature and may include other components, such as additional computing devices. Machines used in the agriculture and construction industries typically include multiple embedded computing devices associated with various functions and systems. The functionality of the computing device 42 described herein may in fact be performed by one or more computing devices associated with any of various machine systems without departing from the scope of the invention.

The positioning receiver 28, which may be mounted on an elevated portion of the tractor 10 such as a top portion of the operator cabin 16 as illustrated in Fig. 1, determines its geographic location as the tractor 10 travels from place to place and generates and communicates corresponding location data for use by the automatic guidance system 34 and/or other systems, as explained above. The positioning receiver 28 may be or include a satellite navigation receiver that works with a global navigation satellite system (GNSS) such as the global positioning system (GPS) primarily used in the United States, the GLONASS system primarily used in the Soviet Union, or the Galileo system primarily used in Europe. The slope compensation component 40 detects when the tractor 10 is operating on a sloped ground surface and makes adjustments to compensate for the slope. The height compensation component 38 determines a height of the positioning receiver 28 from the ground surface and makes adjustments to positioning and/or guidance information to account for the height. The slope compensation component 40 and the height compensation component 38 are described further below.

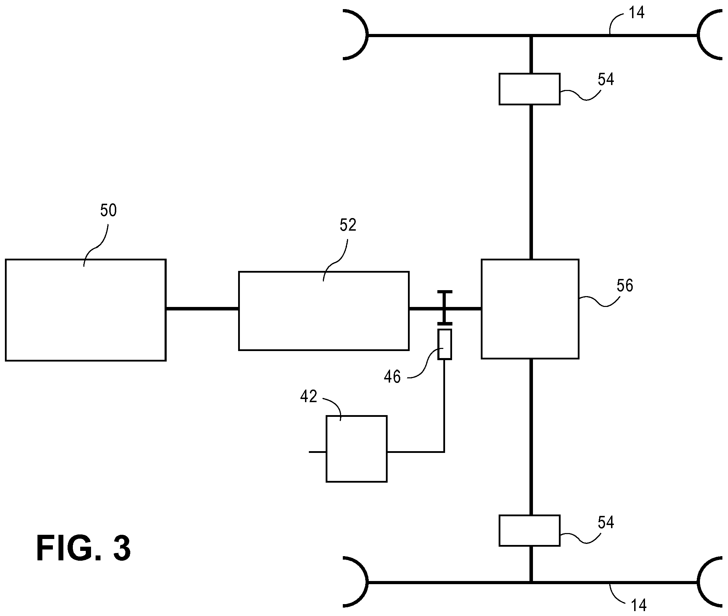

Figure 3 illustrates diagrammatically an exemplary drivetrain 48 for propelling the rear wheels 14 of the tractor 10. While not illustrated, the drivetrain may also include or be linked with the front wheels 12 such that the front wheels 12 are driven via a fixed gear ratio relative to the rear wheels 14. The drive torque of a power source 50 (for example, an internal combustion engine) is transmitted via a gearbox 52 to the rear wheels 14 (and front wheel, if so equipped). Between the gearbox 52 and the rear wheels 14 are planetary reduction gears 54 and a central differential 56. The gear ratios associated with the planetary reduction gears 54 and the central differential 56 are fixed, so that the overall gear ratio of both components is assumed to be a fix value. By way of example, the ratio ($R_p$) of the planetary reduction gears 54 may be 9.2 and the ratio ($R_d$) of the central differential 56 may be 3.58, wherein the product of both ratios ($R_o$) is 32.97.

The rotation speed sensor 46 measures the rotational speed of at least one of the components of the drivetrain 48 for use in determining a rotational speed of at least one of the rear wheels 14, as explained below. In the illustrated embodiment, the rotation speed sensor 46 is placed to measure the output rotation speed of the gearbox 52 and communicates output rotation speed information to the computing device 42. Alternatively, the rotation speed sensor 46 may be used to measure the rotational speed of other components of the drivetrain 48.

The drivetrain 48 illustrated in Fig. 3 is an exemplary drivetrain characterized by mechanical linkages and fixed gears, but the present invention is not so limited and may be used with other types of machine drive systems as well, including machines propelled by hydraulic or electric drive systems. In such systems the use of a drivetrain component to determine wheel rotational speed may not be possible or practical, but other means could be used to determine the wheel rotational speed, such as one or more sensors for directly detecting wheel movement, as explained below.

In the illustrated embodiment, the positioning receiver 28 is operable to receive navigational signals from a plurality of GNSS satellites via the antenna 30 and to determine its geographic location as a function of the received signals, as explained above. The geographic location of the positioning receiver 28, referred to herein as the receiver position point, corresponds to the geographic location of the tractor used by the automatic guidance system 34 or other precision agriculture system unless an offset or adjustment is applied, as explained below. Specifically, the receiver position point determined by the positioning receiver 28 typically corresponds to the location of the antenna 30 associated with the receiver 28. This distinction is relevant where the antenna 30 is separated from other components 32 of the positioning receiver 28, such as where the antenna 30 is placed on or above a roof of the operator cabin 16 and a computing device associated with the receiver 28 is placed inside the cabin 16. The positioning receiver 28 is a relatively small unit compared to the size of the tractor 10 such that, for practical purposes, the location of the positioning receiver 28 and the location of the antenna 30 are often the same. However, as used herein, the receiver position point corresponds to the location of the antenna 30.

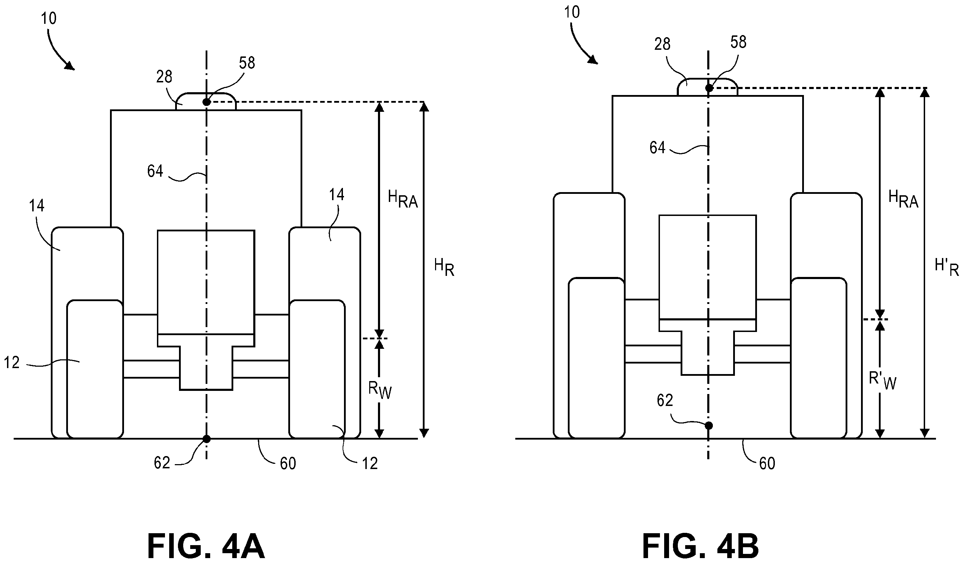

The positioning receiver 28 may be placed at or near a top of the tractor 10, such as on the top of the operator cabin 16 as illustrated in Figs. 1 and 4A-4C, to maximize satellite signal reception. Placing the positioning receiver 28 on top of the tractor 10 results in a receiver position point 58 corresponding to the location of the top of the tractor 10 that may be several meters removed from the ground surface 60 or from an implement associated with the tractor 10. Precision agriculture applications rely on positioning with an accuracy of less than one meter and sometimes an accuracy within the range of one or two centimeters, such that using a receiver position point 58 located several meters from the ground surface or from an implement may result in errors in automated guidance or precision agriculture functions that rely on accurate geographic positioning of the tractor 10 or of an implement associated with the tractor.

For these reasons, most agricultural applications based on satellite positioning require that the tractor 10 or other machine use a location other than the receiver position point 58. The computing device 42 may apply an offset or adjustment or otherwise transform the location corresponding to the receiver position point 58 to a new location referred to herein as a navigation point. The navigation point is a virtual point used by the automatic guidance system 34 or other function to guide the tractor 10 along a defined path. For example, the automatic guidance system 34 may control vehicle steering so that the navigation point moves along a defined or desired path. The navigation point may be used for functions other than navigation, such as where a machine uses the navigation point to determine the placement of seeds, fertilizer or pesticide or, in the construction industry, uses the navigation point to determine the placement of a blade for moving soil.

The navigation point may be defined relative to the receiver position point 58 and may correspond to a location on or near the ground surface, to a location on the tractor or to a location on an implement attached to the tractor. In some applications, it is preferable that the navigation point remain fixed relative to ground engaging elements of the tractor or implement (such as wheels or tracks) or to machine components that are fixed relative to the ground engaging elements, such as a chassis that is rigidly coupled with the ground engaging elements. An exemplary navigation point designated by reference numeral 62 is illustrated in Fig. 4a. The navigation point 62 is situated on the transverse center plane 64 of the tractor 10 and is positioned at or near the ground surface 60. This location of the navigation point 62 may be preferred, for example, when the tractor 10 is performing a seeding or tilling operation. The navigation point may alternatively be located at or near a draw bar or other portion of a hitch system of the tractor 10, such as the center of the ball of a ball hitch provided for connection with an implement.

The computing device 42 may determine the location of the navigation point 62 by applying an offset to the receiver position point 58. To accurately place the navigation point 62 at a location corresponding to the ground surface 60 the height of the positioning receiver 28 from the ground surface 60 must be known and may be preprogrammed into the system by the manufacturer or the dealer, or may be determined by an end user and submitted to the system. The actual height of the positioning receiver 28 may change over time and may be affected by such factors as the size of the wheels and the level of tire inflated.

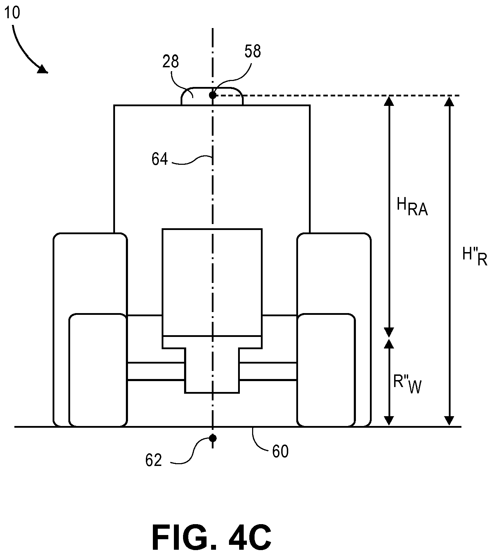

Figures 4A-C illustrate how variations in the size of the wheels 12, 14 can affect placement of the navigation point 62 if the location of the navigation point 62 is not adjusted to account for the difference in the height of the tractor 10 resulting from the variations in wheel size. In Fig. 4A the size of the wheels 12, 14 matches an anticipated size of the wheels 12, 14 such that the navigation point corresponds to the ground surface. In Fig. 4B the tractor 10 has larger wheels 12, 14 that increase the overall height of the tractor 10, resulting in the navigation point 62 being placed above the ground surface 60. In Fig. 4C the tractor 10 has smaller wheels 12, 14 that decrease the overall height of the tractor 10, resulting in the navigation point 62 being placed below the ground surface 60. The wheel radius may change when the tires or the entire wheels are changed.

The receiver height may be calculated as the sum of two values: 1) the distance between the receiver position point 58 and the axis of the rear wheels 14 and 2) the radius of the rear wheels 14, as illustrated in Figs. 4A-C and represented by the following equation:

$$H_R = H_{RA} + R_W \qquad (1)$$

Where

$H_R$ = Height of the positioning receiver from the ground surface
$H_{RA}$ = Distance from the positioning receiver to the axis of the rear wheels
$R_W$ = Radius of the rear wheels

As explained above, the radius $R_W$ may correspond to the outermost circumference of the wheel including the tire tread, or may correspond to an effective wheel radius reflecting the fact that the tire tread normally sinks into ground. The static load radius provided by the tire manufacturer may be used in equation (1) as an effective wheel radius.

For purposes of the present discussion the wheel radius ($R_W$) refers to the radius of the rear wheels of the tractor only because the rear wheel radius (as opposed to the front wheel radius) is used for determining the height of the positioning receiver 28 from the ground surface 60. Embodiments of the invention may use the radius of one (or both) of the rear wheels 14 without consideration of the front wheels 12 because the rear and front wheels will typically be a matching set such that changes to the rear wheels 14 are reflected by changes to the front wheels 12. Furthermore, changes in the size of the front wheels 12 will typically have less of an impact on the receiver height than changes in the size of the rear wheels 14.

The value of $H_{RA}$ is typically fixed and may be measured by an operator or provided by the machine manufacturer or dealer. In Fig. 4B the value of $H_{RA}$ is the same as in Fig. 4A, but the wheel radius ($R'_W$) is larger. In Fig. 4C the value of $H_{RA}$ is also the same as in Fig. 4A, but the wheel radius ($R''_W$) is smaller. Thus, determining the value of the wheel radius would allow the system to adjust the positioning receiver height to compensate for differences in wheel size. The radius of the wheel ($R_W$) may be determined using a rotational speed of the wheel ($\omega_W$) and at least one travel characteristic of the tractor 10, such as a distance traveled per unit of time or a velocity. The following equations illustrate one method of finding the wheel radius ($R_W$) using a distance traveled, time and the wheel rotational speed ($\omega_W$):

$$d = \omega_W \times t \times U_W \qquad (2)$$

Where

$d$ = distance traveled by the tractor
$t$ = time interval corresponding to the distance travelled
$U_W$ = wheel circumference

The wheel circumference (Uw) is equal to the diameter of the wheel ($D_W$) multiplied by pi ($\pi$) or equal to two times the wheel radius ($R_W$) multiplied by pi ($\pi$). Making that substitution, equation (2) can be rewritten as follows:

$$d = \omega_W \times t \times 2 \times R_W \times \pi \qquad (3)$$

Equation (3) can then be rewritten to define the wheel radius in terms of the wheel rotational speed, the distance traveled and the time interval:

$$R_W = \frac{d}{\omega_W \times t \times 2 \times \pi} \qquad (4)$$

Given that the velocity (v) of the tractor 10 can be defined as distance (d) divided by the time interval (t), the definition of the wheel radius ($R_W$) expressed in equation (4) can be rewritten as:

$$R_W = \frac{v}{\omega_W \times 2 \times \pi} \qquad (5)$$

The rotational speed of the wheel ($\omega_W$) may be determined using the sensor 46 to sense the movement of the wheel 14 directly or may be derived based on the rotational speed of one or more components of the drivetrain 48. One or more dedicated sensors may be used to measure the rotational speed of the wheel ($\omega_W$), such as an image sensor that captures images of the wheel or a sensor that uses principles of magnetism to detect movement of metal portions of the wheel. Alternatively, the rotational speed of the wheel may be determined using one or more sensors associated with other machine systems, such as an antilock braking system or an electronic stability system.

In the exemplary drivetrain 48 described above and illustrated in Fig. 3, a sensor 46 may determine the output rotational speed of the gearbox ($\omega_{GB}$) as explained above and that rotation speed may be used to determine the rotational speed of the wheel ($\omega_W$). If the planetary reduction gear ratio ($R_p$) is 9.2 and the central differential ratio ($R_d$) is 3.58 as set forth above, for example, the overall ratio ($R_o$) may be the product of those two values, or approximately 32.97. The

wheel rotational speed ($\omega_W$) may be defined as:

$$\omega_W = \frac{\omega_{GB}}{R_O} \qquad (6)$$

By way of example, an output rotational speed of the gearbox ($\omega_{GB}$) of 5,000 revolutions per minute would result in a wheel rotation speed ($\omega_W$) of approximately 152 revolutions per minute. Virtually any component of the drivetrain 48 may be used in this manner to determine the rotation speed of the wheel ($\omega_W$), including the engine.

The travel distance (d) or the velocity (v), or both, of the tractor 10 may be determined using any of various methods. In one embodiment of the invention, the travel distance (d) is determined using a GNSS navigation device that continuously determines the tractor's geographic location. Alternatively, the GNSS navigation device may determine the velocity (v) using the Doppler effect (that is, the Doppler shift in the GNSS signals due to the receivers motion), which may be more accurate than using geographic location information. In another embodiment, the travel distance (d) or the velocity (v) is determined using RADAR or SONAR technology. In another embodiment, the travel distance (d) or the velocity (v) is determined using an image capture and processing system (not shown) to capture a series of images of the ground surface and compare the images to detect movement of the tractor 10 relative to the ground surface over time. These are but a few examples.

The method set forth above for determining the radius of the wheel 14 based on the wheel's rotational speed and the tractor's travel characteristic is based on the assumption that the wheel 14 does not spin or "slip" on the ground surface-that is, that the portion of the wheel 14 in contact with the ground does not move relative to the ground surface. In practice, however, a driven wheel typically experiences some slip during operation of the tractor 10. Wheel slip may occur for a number of reasons, including horizontal forces imposed on the wheels 14 by a load pulled by the tractor 10, soft ground that yields to horizontal forces, or both. Wheel slip ($\sigma$) may be defined according to the following equation:

$$\sigma = \frac{d_W - d_A}{d_A} \qquad (7)$$

Where

    $d_W$ = travel distance corresponding to wheel rotations in the absence of wheel slip
    $d_A$ = actual travel distance

Thus, if wheel slip ($\sigma$) is ten percent, an actual travel distance of 100 meters would be measured as 110 meters if based on wheel rotations alone. This discrepancy can result in an incorrect calculated wheel radius and, thus, errors in the calculated height of the positioning receiver 28. To address the problem of wheel slip, wheel rotational speed may be based on a non-driven wheel, which is less likely to experience slip. Alternatively, the measured or calculated wheel rotational speed ($\omega_W$), traveled distance (d) or velocity (v) may be adjusted to compensate for slip. The actual wheel slip may be determined using methods known in the art or may be estimated as explained hereinafter. Wheel slip may be higher (e.g., between 10% and 20%) when the tractor 10 is operating in a field and lower (e.g., between 1% and 3%) when the tractor 10 is travelling on a road. Therefore, the computing device 42 may determine whether the tractor 10 is operating in a field or travelling on a road based on, for example, the speed of the tractor 10, the location of the tractor 10 as determined by the positioning receiver 28, or both. If the computing device 42 determines that the tractor 10 is operating in a field, it may assume the slip is 15% and adjust the wheel rotational speed ($\omega_W$), traveled distance (d) or velocity (v) accordingly. If the computing device 42 determines that the tractor 10 is operating on a road, it may assume the slip is 3% and adjust the wheel rotational speed ($\omega_W$), traveled distance (d) or velocity (v) accordingly.

To compensate for wheel slip, the adjusted value of the traveled distance (d) may be defined according to the following equation:

$$d = \frac{d_M}{1 - \sigma} \qquad (8)$$

Where
$d_M$ = the measured travel distance of the tractor
The same compensation can also be applied for the adjusted value of the velocity (v) according the following equation:

$$v = \frac{v_M}{1-\sigma} \qquad (9)$$

Where

$v_M$ = the measured velocity of the tractor

These values compensated for wheel slip can then be used to calculate wheel radius ($R_W$) according equations (4) or (5).

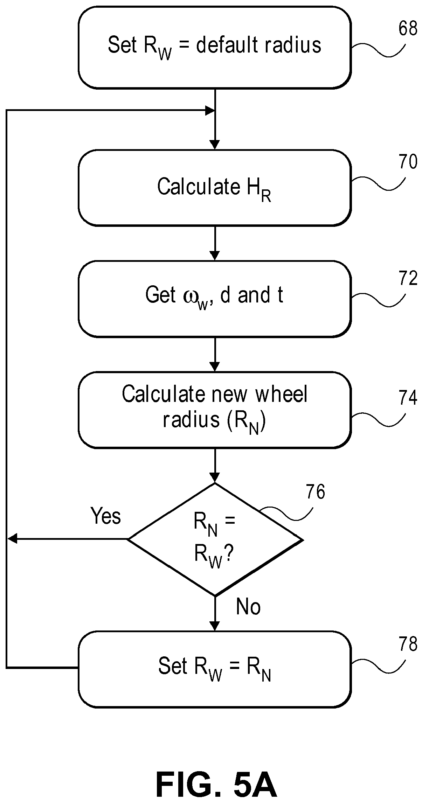

An exemplary method of operation is depicted in the flow diagram of Fig. 5A. Initially, the wheel radius $R_W$ is set to some default wheel radius value that preferably corresponds to a radius of the original wheels, as depicted in block 68. This value may be determined by the manufacturer or a dealer. Using the default value of $R_W$, the computing device 42 calculates the positioning receiver height $H_R$ by, for example, adding the values of $R_W$ and $H_{RA}$ according to equation (1), as depicted in block 70. Values of the wheel rotational speed ($\omega_W$), travel distance ($d$) and the time interval ($t$) corresponding to the travel distance are collected during operation of the machine, as depicted in block 72. Using these values, the computing device 42 calculates a new wheel radius ($R_N$), as depicted in block 74. This may be done using, for example, equations (2), (3) and (4) set forth and explained above.

The computing device then determines whether the new wheel radius $R_N$ is the same as $R_W$, as depicted in block 76. If the two values are the same, the process returns to block 70. If the two values are not the same, the process sets $R_W$ equal to the new wheel radius, as depicted in block 78, and then returns to block 70.

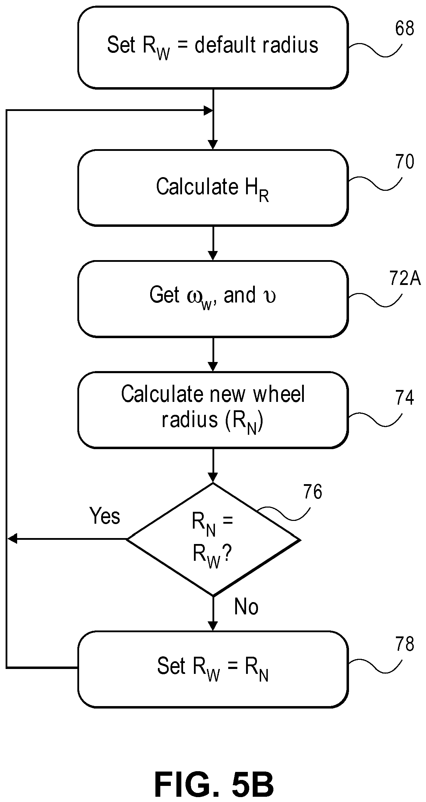

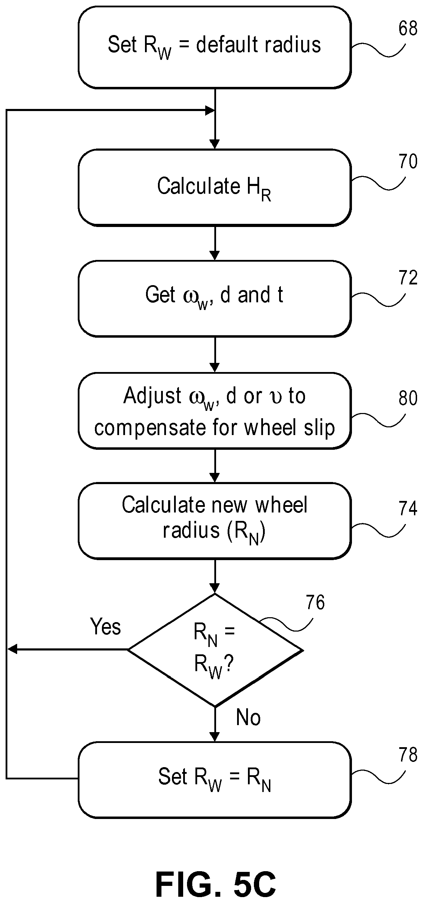

The method depicted in Fig. 5B is similar to the method depicted in Fig. 5A, except that instead of getting distance ($d$) and time ($t$) in block 72, the computing device 42 gets a velocity ($v$) of the tractor in block 72A. The method depicted in Fig. 5C is also similar to the method depicted in Fig. 5A, except that it includes the extra step of adjusting the wheel rotational speed ($\omega_W$), traveled distance ($d$) or velocity ($v$) to compensate for wheel slip at block 80.

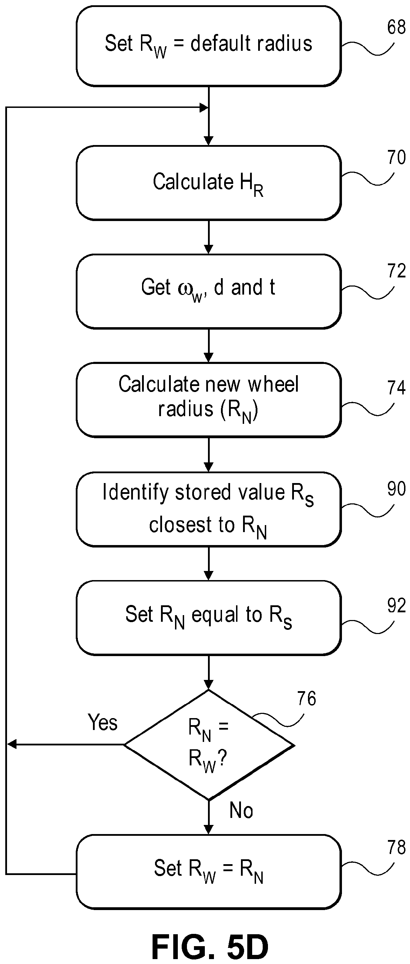

The method depicted in Fig. 5D is also similar to the method depicted in Fig. 5A except that the method of Fig. 5D involves using the calculated wheel radius ($R_N$) to select a pre-determined value as the wheel radius ($R_W$). A plurality of predetermined wheel radius values may be stored as a look-up table in the data storage unit 44 in the form of a list of tire sizes available for use with the tractor 10, such as a list of static loaded radius values provided by manufacturers and described above. The computing device 42 may determine the new wheel radius ($R_N$) using the rotational speed of the wheel ($\omega_W$) and at least one travel characteristic of the tractor 10, such as a distance traveled per unit of time or a velocity of the tractor 10, as explained above, and then compare the determined wheel radius ($R_N$) to radii values in the stored list. The computing device 42 may then identify a stored radii value ($R_S$) that is closest to the calculated wheel radius ($R_N$), as depicted in block 90, and set the wheel radius ($R_W$) equal to the identified stored radii value ($R_S$), as depicted in block 92. Selecting a predetermined value for use as the wheel radius ($R_W$) may eliminate errors associated with wheel slip by resolving variations in the calculated wheel radius ($R_N$) in favor of know wheel radii values.

The methods set forth in Figs. 5A-5D may be performed regularly by the computing device 42, such as once every minute, once every five minutes, once every thirty minutes, once each hour, once each four hours or once each day. The methods may be performed continuously or substantially continuously. Furthermore the methods may be performed depending on road/field operation with regard to slip or in any other condition being preferred in terms of accuracy. Alternatively or additionally, the methods may be performed when a tire change is detected or indicated. By performing the methods regularly or continuously the computing device can make adjustments to the value of the wheel radius ($R_W$) to thereby make corrections to the placement of the navigation point in real time or in near real time. This method may adjust for changes in tire pressure during operation of the machine. Alternatively or additionally, the methods may be performed after a change in tire pressure is detected or indicated.

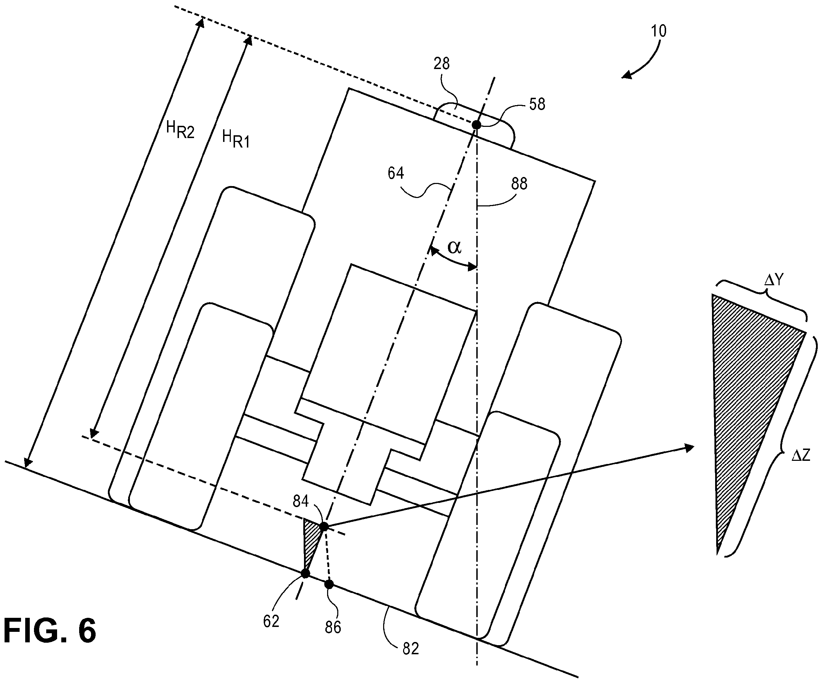

Figure 6 illustrates an exemplary scenario in which the present invention resolves inaccuracies in the positioning and guidance systems of the tractor 10. Operating on a sloped ground surface 82 can cause the system to generate an incorrect navigation point if steps are not taken to account for the slope and any errors in the height of the positioning receiver 28. If the slope of the ground surface 82 is not taken into account the automatic guidance system 34 would generate a navigation point that is directly below the positioning receiver, somewhere on the line 88, clearly not in line with the center of the tractor 10. The slope compensation component 40 of the system may adjust placement of the navigation point by detecting the slope of the tractor 10 and placing the navigation point on the transverse center plane 64 of the tractor 10. However, if the computing device 42 determines the location of the navigation point based on an incorrect receiver height $H_{R1}$ rather than the correct receiver height $H_{R2}$, the resulting navigation point 84 is above the ground surface 82 and may result in positioning errors.

Because the tractor 10 is not operating on a level ground surface, the navigation point 84 is not in vertical alignment with the desired navigation point 62. This situation may result in the automatic guidance system 34 performing as though the navigation point corresponded to point 86. The difference between the desired navigation point 62 and the placed navigation point 84 can be described in terms of a $\Delta Z$ offset corresponding to a direction normal to the ground surface 82 and a $\Delta Y$ offset corresponding to a direction parallel with the ground surface 82. The $\Delta Z$ offset is the navigation point placement error that may result if the computing device 42 is using a fixed receiver height that is incorrect for any of the reasons discussed herein. The $\Delta Y$ offset represents the lateral placement error of the navigation point along the ground surface 82.

The following equations describe $\Delta Y$ in terms of the slope of the ground surface ($\alpha$) and the difference between the actual and estimated height of the positioning receiver:

$$\Delta Z = H_2 - H_1 \qquad (10)$$

$$\Delta Y = \tan(\alpha) \times \Delta Z \qquad (11)$$

$$\Delta Y = \tan(\alpha) \times (H_2 - H_1) \qquad (12)$$

In an exemplary scenario, $H_1$ is 2.5 meters and $H_2$ is 2.73 meters such that $\Delta Z$ is 0.23 meters. If the tractor 10 is operating on a slope of 20° (the value of $\alpha$), $\Delta Y$ is approximately 0.084 meters or 8.4 centimeters.

Although the invention has been described with reference to the preferred embodiment illustrated in the attached drawing figures, it is noted that equivalents may be employed and substitutions made herein without departing from the scope of the invention as recited in the claims. The positioning receiver 28 and automatic guidance system 34 may be used with other machines, for example, such as harvesting machines and sprayers.

Having thus described the preferred embodiment of the invention, what is claimed as new and desired to be protected by Letters Patent includes the following:

## Claims

1.  A mobile machine (10) comprising:

    a wheel (12,14) for supporting the machine on a ground surface, the wheel including a tire defining an outer portion of the wheel; and
    a positioning receiver (28);
    **characterised in that** the mobile machine further comprises:
    one or more computing devices (42) configured to -

    determine a travel characteristic of the machine,
    determine a rotational speed ($\omega_W$) of the wheel,
    determine a radius ($R_W$) of the tire based on the rotational speed of the wheel and the travel characteristic, and
    determine a height ($H_R$) of the positioning system receiver from the ground surface using the radius of the tire.

2.  The mobile machine as set forth in claim 1, the one or more computing devices further configured to -
    adjust the determined rotational speed of the wheel or the travel characteristic of the machine to compensate for wheel slip ($\sigma$), and
    determine the radius of the tire based on the adjusted rotational speed of the wheel and the travel characteristic.

3.  The mobile machine as set forth in claim 2, the one or more computing devices further configured to -
    determine whether the mobile machine is operating on a road or in an off-road environment,
    adjust the determined travel characteristic of the machine or the rotational speed of the wheel by a first amount to compensate for wheel slip if the mobile machine is operating on a road, and
    adjust the determined travel characteristic of the machine or the rotational speed of the wheel by a second amount to compensate for wheel slip if the mobile machine is operating in an off-road environment,
    the first amount being different than the second amount.

4.  The mobile machine as set forth in claim 1, the travel characteristic including a travel distance (d) and a travel time associated with the travel distance.

5.  The mobile machine as set forth in claim 1, the travel characteristic including a travel velocity (v).

**6.** The mobile machine as set forth in claim 1, further comprising a wheel speed sensor (46) for determining the rotational speed of the wheel by detecting movement of the wheel.

**7.** The mobile machine as set forth in claim 1, wherein the wheel is not a driven wheel.

**8.** The mobile machine as set forth in claim 1, further comprising -
a drivetrain (48); and
a drivetrain sensor for detecting a rotational speed of a component of the drivetrain other than the wheel,
wherein the one or more computing devices are configured to use the rotational speed of the drivetrain component to determine the rotational speed of the wheel.

**9.** The mobile machine as set forth in claim 1, further comprising -
a gearbox (52); and
a gearbox output speed sensor for detecting an output rotational speed of the gearbox,
wherein the one or more computing devices are configured to determine the rotational speed of the wheel by applying a gear ratio to the output rotational speed of the gearbox.

**10.** The mobile machine as set forth in claim 1, further comprising -
an engine output speed sensor for detecting an output rotational speed of the engine (50),
wherein the one or more computing devices are configured to determine the rotational speed of the wheel by applying a gear ratio to the output rotational speed of the engine.

**11.** The mobile machine as set forth in claim 1, the one or more computing devices being configured to determine the travel characteristic using machine position information from a positioning system associated with the positioning system receiver.

**12.** A method of determining a height of a positioning system receiver of a mobile machine (10), **characterized in** the method comprising:

determining a travel characteristic of the machine;
determining a rotational speed ($\omega_w$) of a wheel (12,14) of the machine, the wheel supporting the machine on a ground surface and including a tire defining an outer portion of the wheel;
determining a radius ($R_W$) of the tire based on the rotational speed of the wheel and the travel characteristic; and
determining a height ($H_R$) of the positioning system receiver from the ground surface using the radius of the tire.

**13.** The method as set forth in claim 12, further comprising -
adjusting the determined travel characteristic of the machine to compensate for wheel slip ($\sigma$), and
determine the radius of the tire based on the adjusted rotational speed of the wheel and the travel characteristic.

**14.** The method as set forth in claim 12, wherein determining the travel characteristic of the machine includes determining a travel distance ($d$) and a travel time.

**15.** The method as set forth in claim 12, wherein determining the travel characteristic of the machine includes determining a travel velocity ($v$).

**16.** The method as set forth in claim 12, further comprising determining the rotational speed of the wheel using a wheel speed sensor (46) that detects movement of the wheel.

**17.** The method as set forth in claim 12, wherein the wheel is not a driven wheel.

**18.** The method as set forth in claim 12, further comprising -
detecting a rotational speed of a drivetrain component of the mobile machine other than the wheel; and
using the rotational speed of the drivetrain component to determine the rotational speed of the wheel.

**19.** The method as set forth in claim 12, further comprising -
detecting an output rotational speed of a gearbox (52); and
determining the rotational speed of the wheel by applying a gear ratio to the output rotational speed of the gearbox.

**20.** The method as set forth in claim 12, further comprising -
detecting an output rotational speed of the engine (50); and
determining the rotational speed of the wheel by applying a gear ratio to the output rotational speed of the engine.

**Patentansprüche**

**1.** Mobile Maschine (10), mit dem Folgenden:

einem Rad (12, 14) zum Abstützen der Maschine auf einer Bodenoberfläche, wobei das Rad einen einen äußeren Teil des Rads definierenden Reifen aufweist; und
einem Positionierempfänger (28); **dadurch gekennzeichnet, dass** die mobile Maschine weiterhin das Folgende aufweist:
ein Rechengerät (42) oder mehrere Rechengeräte (42), das konfiguriert ist bzw. die konfiguriert sind, um:

eine Bewegungscharakteristik der Maschine zu bestimmen,
eine Umdrehungsgeschwindigkeit ($\omega_W$) des Rads zu bestimmen,
einen Radius (Rw) des Reifens basierend auf der Umdrehungsgeschwindigkeit des Rads und der Bewegungscharakteristik zu bestimmen, und
eine Höhe ($H_R$) des Positioniersystemempfängers von der Bodenoberfläche aus unter Verwendung des Radius des Reifens zu bestimmen.

**2.** Mobile Maschine nach Anspruch 1, wobei das eine Rechengerät bzw. die mehreren Rechengeräte weiterhin konfiguriert ist bzw. sind, um:

die bestimmte Umdrehungsgeschwindigkeit des Rads oder die Bewegungscharakteristik der Maschine zu verstellen, um einen Radschlupf ($\sigma$) zu kompensieren, und
den Radius des Reifens basierend auf der eingestellten Umdrehungsgeschwindigkeit des Rads und der Bewegungscharakteristik zu bestimmen.

**3.** Mobile Maschine nach Anspruch 2, wobei das eine Rechengerät bzw. die mehreren Rechengeräte weiterhin konfiguriert ist bzw. sind, um:

zu bestimmen, ob die mobile Maschine auf einer Straße oder abseits einer Straße betrieben wird,
die bestimmte Bewegungscharakteristik der Maschine oder die Umdrehungsgeschwindigkeit des Rads um einen ersten Wert zu verstellen, um einen Radschlupf zu kompensieren, falls die mobile Maschine auf einer Straße betrieben wird, und
die bestimmte Bewegungscharakteristik der Maschine oder die Umdrehungsgeschwindigkeit des Rads um einen zweiten Wert zu verstellen, um einen Radschlupf zu kompensieren, falls die mobile Maschine abseits einer Straße betrieben wird,
wobei sich der erste Wert von dem zweiten Wert unterscheidet.

**4.** Mobile Maschine nach Anspruch 1, wobei die Bewegungscharakteristik eine Bewegungsstrecke (d) und eine der Bewegungsstrecke zugeordnete Bewegungszeit aufweist.

**5.** Mobile Maschine nach Anspruch 1, wobei die Bewegungscharakteristik eine Bewegungsgeschwindigkeit (v) aufweist.

**6.** Mobile Maschine nach Anspruch 1, weiterhin mit einem Radgeschwindigkeitssensor (46) zum Bestimmen der Umdrehungsgeschwindigkeit des Rads durch Erfassen einer Bewegung des Rads.

**7.** Mobile Maschine nach Anspruch 1, wobei das Rad kein angetriebenes Rad ist.

**8.** Mobile Maschine nach Anspruch 1, weiterhin mit:

einem Antriebsstrang (48); und
einem Antriebsstrangsensor zum Erfassen der Umdrehungsgeschwindigkeit einer Komponente des Antriebsstrangs mit Ausnahme des Rads,

wobei das eine Rechengerät konfiguriert ist bzw. die mehreren Rechengeräte konfiguriert sind, um die Umdrehungsgeschwindigkeit der Komponente des Antriebsstrang zu verwenden, um die Umdrehungsgeschwindigkeit des Rads zu bestimmen.

**9.** Mobile Maschine nach Anspruch 1, weiterhin mit dem Folgenden:

einem Getriebe (52); und
einem Getriebeausgangsgeschwindigkeitssensor zum Erfassen einer Ausgangsdrehgeschwindigkeit des Getriebes,
wobei das eine Rechengerät konfiguriert ist bzw. die mehreren Rechengeräte konfiguriert sind, um die Umdrehungsgeschwindigkeit des Rads durch Anwendung eines Übersetzungsverhältnisses auf die Ausgangsdrehgeschwindigkeit des Getriebes zu bestimmen.

**10.** Mobile Maschine nach Anspruch 1, weiterhin mit dem Folgenden:

einem Motorausgangsgeschwindigkeitssensor zum Erfassen einer Ausgangsdrehgeschwindigkeit des Motors (50),
wobei das eine Rechengerät konfiguriert ist bzw. die mehreren Rechengeräte konfiguriert sind, um die Umdrehungsgeschwindigkeit des Rads durch Anwendung eines Übersetzungsverhältnisses auf die Ausgangsdrehgeschwindigkeit des Motors zu bestimmen.

**11.** Mobile Maschine nach Anspruch 1, wobei das eine Rechengerät konfiguriert ist bzw. die mehreren Rechengeräte konfiguriert sind, um die Bewegungscharakteristik unter Verwendung von Maschinenpositionsinformationen von einem Positioniersystem zu bestimmen, das dem Positioniersystemempfänger zugeordnet ist.

**12.** Verfahren zum Bestimmen der Höhe eines Positioniersystemempfängers einer mobilen Maschine (10), **dadurch gekennzeichnet, dass** das Verfahren das Folgende aufweist:

Bestimmen einer Bewegungscharakteristik der Maschine;
Bestimmen einer Umdrehungsgeschwindigkeit ($\omega_W$) eines Rads (12, 14) der Maschine, wobei das Rad die Maschine auf einer Bodenoberfläche abstützt und einen einen äußeren Teil des Rads definierenden Reifen aufweist;

Bestimmen eines Radius (Rw) des Reifens basierend auf der Umdrehungsgeschwindigkeit des Rads und der Bewegungscharakteristik; und
Bestimmen einer Höhe ($H_R$) des Positioniersystemempfängers von der Bodenoberfläche aus unter Verwendung des Radius des Reifens.

**13.** Verfahren nach Anspruch 12, weiterhin mit dem Folgenden:

Verstellen der bestimmten Bewegungscharakteristik der Maschine, um einen Radschlupf ($\sigma$) zu kompensieren, und
Bestimmen des Radius des Reifens basierend auf der eingestellten Umdrehungsgeschwindigkeit des Rads und der Bewegungscharakteristik.

**14.** Verfahren nach Anspruch 12, wobei das Bestimmen der Bewegungscharakteristik der Maschine das Bestimmen einer Bewegungsstrecke (d) und einer Bewegungszeit aufweist.

**15.** Verfahren nach Anspruch 12, wobei das Bestimmen der Bewegungscharakteristik der Maschine das Bestimmen einer Bewegungsgeschwindigkeit (v) aufweist.

**16.** Verfahren nach Anspruch 12, weiterhin mit dem Bestimmen der Umdrehungsgeschwindigkeit des Rads unter Verwendung eines Radgeschwindigkeitssensors (46), der eine Bewegung des Rads erfasst.

**17.** Verfahren nach Anspruch 12, wobei das Rad kein angetriebenes Rad ist.

**18.** Verfahren nach Anspruch 12, weiterhin mit dem Folgenden:

Erfassen der Umdrehungsgeschwindigkeit einer Komponente eines Antriebsstrangs mit Ausnahme des Rads; und

Verwenden der Umdrehungsgeschwindigkeit der Komponente des Antriebsstrang, um die Umdrehungsgeschwindigkeit des Rads zu bestimmen.

**19.** Verfahren nach Anspruch 12, weiterhin mit dem Folgenden:

Erfassen einer Ausgangsdrehgeschwindigkeit eines Getriebes (52); und
Bestimmen der Umdrehungsgeschwindigkeit des Rads durch Anwendung eines Übersetzungsverhältnisses auf die Ausgangsdrehgeschwindigkeit des Getriebes.

**20.** Verfahren nach Anspruch 12, weiterhin mit dem Folgenden:

Erfassen einer Ausgangsdrehgeschwindigkeit eines Motors (50); und
Bestimmen der Umdrehungsgeschwindigkeit des Rads durch Anwendung eines Übersetzungsverhältnisses auf die Ausgangsdrehgeschwindigkeit des Motors.

**Revendications**

**1.** Machine mobile (10) comprenant :

une roue (12, 14) destinée à supporter la machine sur une surface de sol, la roue comportant un pneu définissant une partie externe de la roue ; et
un récepteur de positionnement (28) ;
**caractérisée en ce que** la machine mobile comprend, en outre :

un ou plusieurs dispositifs de calcul (42) configurés de manière à :

déterminer une caractéristique de déplacement de la machine,
déterminer une vitesse de rotation ($\omega_W$) de la roue,
déterminer un rayon ($R_W$) du pneu sur la base de la vitesse de rotation de la roue et de la caractéristique de déplacement, et

déterminer une hauteur ($H_R$) du récepteur de dispositif de positionnement par rapport à la surface du sol en utilisant le rayon du pneu.

**2.** Machine mobile selon la revendication 1, le ou les dispositifs de calcul étant, en outre, configurés de manière à :

ajuster la vitesse de rotation de la roue ou la caractéristique de déplacement de la machine déterminée afin de compenser le glissement de roue ($\sigma$), et
déterminer le rayon du pneu sur la base de la vitesse de rotation de la roue et de la caractéristique de déplacement ajustées.

**3.** Machine mobile selon la revendication 2, le ou les dispositifs de calcul étant, en outre, configurés de manière à :

déterminer si la machine mobile travaille sur une route ou dans un environnement non routier,
ajuster la caractéristique de déplacement de la machine ou la vitesse de rotation de la roue déterminée d'une première valeur afin de compenser le glissement de roue si la machine mobile travaille sur une route, et
ajuster la caractéristique de déplacement de la machine ou la vitesse de rotation de la roue déterminée d'une seconde valeur afin de compenser le glissement de roue si la machine mobile travaille dans un environnement non routier,
la première valeur étant différente que la seconde valeur.

**4.** Machine mobile selon la revendication 1, la caractéristique de déplacement comportant une distance de déplacement (d) et une durée de déplacement associée à la distance de déplacement.

**5.** Machine mobile selon la revendication 1, la caractéristique de déplacement comportant une vitesse de déplacement (v).

**6.** Machine mobile selon la revendication 1, comprenant, en outre, un capteur de vitesse de roue (46) afin de déterminer la vitesse de rotation de la roue en détectant le mouvement de la roue.

**7.** Machine mobile selon la revendication 1, dans laquelle la roue n'est pas une roue motrice.

**8.** Machine mobile selon la revendication 1, comprenant, en outre :

une transmission (48) ; et
un capteur de transmission destiné à détecter une vitesse de rotation d'un composant de transmission autre que la roue,
dans laquelle le ou les dispositifs de calcul sont configurés de manière à utiliser la vitesse de rotation du composant de transmission afin de déterminer la vitesse de rotation de la roue.

**9.** Machine mobile selon la revendication 1, comprenant, en outre :

une boîte de vitesse (52) ; et
un capteur de vitesse de sortie de boîte de vitesse afin de détecter une vitesse de rotation de sortie de la boîte de vitesse,
dans laquelle le ou les dispositifs de calcul sont configurés de manière à déterminer la vitesse de rotation de la roue en appliquant un rapport de réduction sur la vitesse de rotation de sortie de la boîte de vitesse.

**10.** Machine mobile selon la revendication 1, comprenant, en outre :

un capteur de vitesse de sortie de moteur afin de détecter une vitesse de rotation de sortie du moteur (50),
dans laquelle le ou les dispositifs de calcul sont configurés de manière à déterminer la vitesse de rotation de la roue en appliquant un rapport de réduction sur la vitesse de rotation de sortie du moteur.

**11.** Machine mobile selon la revendication 1, le ou les dispositifs de calcul étant configurés de manière à déterminer la caractéristique de déplacement en utilisant les informations de position de machine à partir d'un dispositif de positionnement associé au récepteur de dispositif de positionnement.

**12.** Procédé de détermination d'une hauteur d'un récepteur de dispositif de positionnement d'une machine mobile (10), **caractérisé en ce que** le procédé comprend :

la détermination d'une caractéristique de déplacement de la machine ;
la détermination d'une vitesse de rotation ($\omega_W$) d'une roue (12, 14) de la machine, la roue supportant la machine sur une surface du sol et comportant un pneu définissant une partie externe de la roue ;
la détermination d'un rayon ($R_W$) du pneu sur la base de la vitesse de rotation de la roue et de la caractéristique de déplacement ; et
la détermination d'une hauteur ($H_R$) du récepteur de dispositif de positionnement par rapport à la surface du sol en utilisant le rayon du pneu.

**13.** Procédé selon la revendication 12, comprenant, en outre :

l'ajustement de la caractéristique de déplacement de la machine déterminée afin de compenser le glissement de roue ($\sigma$), et
la détermination du rayon du pneu sur la base de la vitesse de rotation de la roue et de la caractéristique de déplacement ajustées.

**14.** Procédé selon la revendication 12, dans lequel la détermination de la caractéristique de déplacement de la machine comporte la détermination d'une distance de déplacement (d) et d'une durée de déplacement.

**15.** Procédé selon la revendication 12, dans lequel la détermination de la caractéristique de déplacement de la machine comporte la détermination d'une vitesse de déplacement (v).

**16.** Procédé selon la revendication 12, comprenant, en outre, la détermination de la vitesse de rotation de la roue en utilisant un capteur de vitesse de roue (46) qui détecte le mouvement de la roue.

**17.** Procédé selon la revendication 12, dans lequel la roue n'est pas une roue motrice.

**18.** Procédé selon la revendication 12, comprenant, en outre :

la détection d'une vitesse de rotation d'un composant de transmission de la machine mobile autre que la roue ; et
l'utilisation de la vitesse de rotation du composant de transmission afin de déterminer la vitesse de rotation de la roue.

**19.** Procédé selon la revendication 12, comprenant, en outre :

la détection d'une vitesse de rotation de sortie d'une boîte de vitesse (52) ; et
la détermination de la vitesse de rotation de la roue en appliquant un rapport de réduction sur la vitesse de rotation de sortie de la boîte de vitesse.

**20.** Procédé selon la revendication 12, comprenant, en outre :

la détection d'une vitesse de rotation de sortie du moteur (50) ; et
la détermination de la vitesse de rotation de la roue en appliquant un rapport de réduction sur la vitesse de rotation de sortie du moteur.

**FIG. 1**

EP 3 100 601 B1

**FIG. 2**

EP 3 100 601 B1

FIG. 3

FIG. 4B

FIG. 4A

EP 3 100 601 B1

**FIG. 4C**

**FIG. 5A**

Set $R_W$ = default radius — 68

Calculate $H_R$ — 70

Get $\omega_w$, and $\upsilon$ — 72A

Calculate new wheel radius ($R_N$) — 74

$R_N = R_W$? — 76

Yes

No

Set $R_W = R_N$ — 78

## FIG. 5B

Set $R_W$ = default radius — 68

Calculate $H_R$ — 70

Get $\omega_w$, d and t — 72

Adjust $\omega_w$, d or $\upsilon$ to compensate for wheel slip — 80

Calculate new wheel radius ($R_N$) — 74

76

$R_N = R_W$?

Yes

No

Set $R_W = R_N$ — 78

# FIG. 5C

```
        ┌──────────────────────────────┐
        │   Set R_W = default radius    │──── 68
        └──────────────────────────────┘
                       │
        ┌──────────────▼───────────────┐
        │        Calculate H_R          │──── 70
        └──────────────────────────────┘
                       │
        ┌──────────────▼───────────────┐
        │        Get ω_w, d and t       │──── 72
        └──────────────────────────────┘
                       │
        ┌──────────────▼───────────────┐
        │     Calculate new wheel       │──── 74
        │        radius (R_N)           │
        └──────────────────────────────┘
                       │
        ┌──────────────▼───────────────┐
        │  Identify stored value R_S    │──── 90
        │       closest to R_N          │
        └──────────────────────────────┘
                       │
        ┌──────────────▼───────────────┐
        │     Set R_N equal to R_S      │──── 92
        └──────────────────────────────┘
                       │
           Yes        ◇◇◇◇◇── 76
        ◄──────────  R_N =
                      R_W?
                     ◇◇◇◇◇
                       │ No
        ┌──────────────▼───────────────┐
        │        Set R_W = R_N          │──── 78
        └──────────────────────────────┘
```

# FIG. 5D

FIG. 6

**EP 3 100 601 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130197767 A1